# EUROPÄISCHE PATENTSCHRIFT

(11) **EP 1 370 034 B1**
(45) Veröffentlichungstag und Bekanntmachung des Hinweises auf die Patenterteilung: **10.08.2005**
(21) Anmeldenummer: 03090128.4
(22) Anmeldetag: 25.04.2003
(51) Int. Cl.: H04L 12/56, H04L 29/06

(54) **Fehlertolerante Gateway Gruppe**
Fault Tolerant Gateway Cluster
Groupe de passerelles insensibles à défaillances

(30) Priorität: 06.06.2002 DE 10225548
(43) Veröffentlichungstag der Anmeldung: 10.12.2003
(73) Patentinhaber: SIEMENS AKTIENGESELLSCHAFT, 80333 München (DE)
(72) Erfinder: Kendelbacher, Detlef, 13129 Berlin (DE); Schieblich, Manfred, 12169 Berlin (DE); Stein, Fabrice, 12621 Berlin (DE)

(56) Entgegenhaltungen:
- WO-A-01/74016
- DE-A- 19 832 594
- STRUYVE K ET AL: "A novel generic gateway protection configuration applied to ATM networks" COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8. Juni 1997 (1997-06-08), Seiten 1174-1179, XP010226941 ISBN: 0-7803-3925-8
- SELLIN R: "P-NNI - DIE LOESUNG ZUR ANBINDUNG PRIVATER ATM-NETZE" NTZ (NACHRICHTENTECHNISCHE ZEITSCHRIFT), VDE VERLAG GMBH. BERLIN, DE, Bd. 52, Nr. 5, 1999, Seiten 64-67, XP000846919 ISSN: 0027-707X

## Beschreibung

Die Erfindung betrifft eine Rechneranordnung gemäß dem Oberbegriff des Anspruches 1.

Für die Datenkommunikation, beispielsweise bei den Eisenbahnen, werden häufig Netzwerke eingesetzt. Zu diesen Netzwerken gehören neben den Übertragungsstrecken verschiedene Netzkomponenten, wie z. B. Router, Gateways und Vermittlungseinrichtungen. Aufgrund von Ausfällen von Netzkomponenten sowie aufgrund von Überlastungen im Netz kann es zu Kommunikationseinschränkungen oder zum Kommunikationsausfall kommen. Derartige Störungen können, insbesondere im Bahnwesen, zu betriebseinschränkenden Zuständen führen.

Aus diesem Grund werden Netzwerke mit hohen Verfügbarkeitsanforderungen mit Redundanz ausgelegt. Redundante Anordnungen ermöglichen die Bereitstellung von alternativen Übertragungswegen im Falle von Ausfällen und/oder die Erhöhung der Übertragungskapazitäten im Kommunikationsnetz. Die Redundanz kann sowohl drahtgebundene und drahtlose Übertragungsstrecken, als auch zentrale und dezentrale elektronische Geräte umfassen.

Eine besondere Anforderung stellt die zuverlässige Vermittlung von verbindungsorientierten Kanälen dar. Verbindungsorientierte Kanäle werden bei den Eisenbahnen unter anderem für die Zugsteuerung, beispielsweise im Rahmen des ETCS (Electronic Train Control System), benutzt.

Aus den deutschen Offenlegungsschriften 197 21 246, 198 32 594 und 198 47 292 sind Kommunikationsarchitekturen bekannt, die auf der Einführung von Gatewayrechnern für die Vermittlung von verbindungsorientierten Datenkanälen basieren. Der Vorteil dieser Architekturen besteht insbesondere in der Koordinierung von zentralen und dezentralen Bahndiensten sowie in der Einsparung von Mobilfunkgeräten.

Problematisch ist die durch zusätzliche Gatewayrechner sinkende Gesamtverfügbarkeit des Kommunikationsdienstes. Dieses ist besonders kritisch, wenn ein Gatewayrechner zentral eingesetzt wird, quasi als Netzknoten fungiert und eine Vielzahl von Zügen bedient.

Aus "A novel generic gateway protection configuration applied to ATM networks"; Struyve, K.; Velde, B.V.: Demeester, P.; Commucations, 1997, ICC 97 Montereal, "Towards the Knowledge Millennium", 1997 IEEE International Conference on, Volume: 3, 8-12 June 1997, Pages: 1174-1179 vol. 3 sind Recovery-Verfahren gekoppelter Subnetze bekannt, die beispielsweise bei ATM eingesetzt werden. Es werden zwei dezentrale Recovery-Strategien miteinander kombiniert, um eine hohe Systemverfügbarkeit in einer heterogenen Netzumgebung sicherzustellen. Mit der Kombination dieser Recoverystrategien werden sowohl Ausfälle von protection nodes, als auch Gateway-Ausfälle kompensiert.

Der Erfindung liegt die Aufgabe zugrunde, die Verfügbarkeit des Kommunikationsdienstes für verbindungsorientierte Datenkanäle zu verbessern.

Die Aufgabe wird mit den kennzeichnenden Merkmalen des Anspruches 1 gelöst. Mit der erfindungsgemäßen redundanten Kommunikationsarchitektur wird der Kommunikationsdienst fehlertolerant sowohl gegen Ausfälle der Gatewayrechner, als auch gegen Ausfälle der angeschlossenen Übertragungsmedien. Das Grundprinzip besteht in der Verschaltung von mehreren Kommunikationsgateways zu fehlertoleranten Vermittlungsclusterd. Ein Vermittlungscluster stellt einen logisch redundanten Anschluss an ein Netzwerk oder einen logischen Netzverbund dar und enthält beliebig viele Gateways und Netzzugänge, z. B. ISDN-Basiskanäle. Es ist in der Lage, Verbindung zu einer Zielinstanz aufzubauen und zu verwalten. Das Maß der Ausfallsicherheit der redundant verschalteten Netzvermittlung hängt von der Anzahl und Konfiguration der Netzanschlüsse, Gateways, Vermittlungscluster und Rechner ab und kann auf die Bedürfnisse einer konkreten Anlage zugeschnitten werden. Eine redundante Anordnung enthält mindestens ein Vermittlungscluster. Bei Bedarf können auch weitere Vermittlungscluster eingerichtet und verschaltet werden. In diesem Fall können auch alternative Verbindungen zwischen mehrere Vermittlungsclustern vermittelt werden. Die Anzahl der dafür benutzten Rechner ist skalierbar und hängt von den Anforderungen an Last und Verfügbarkeit, der Art und Anzahl der externen Netzschnittstellen und den Gegebenheiten der örtlichen Anlage ab. Nach der Auswahl und Etablierung der logischen Verbindung werden die nicht mehr benötigten, temporär belegten Ressourcen, freigegeben und stehen damit dem weiteren Vermittlungsprozess wieder zur Verfügung.

Gemäß Anspruch 2 sind Art und Anzahl der Netzanschlüsse je Vermittlungscluster und der Gateways je Vermittlungscluster sowie die Zuordnung der Gateways zu Rechnern konfigurierbar. In Abhängigkeit von der Ausprägung eines Vermittlungsclusters und den verfügbaren Netzanschlüssen kann ein Vermittlungscluster alternative Verbindungen zu einer Zielinstanz aufbauen.

Mit Hilfe einer durch Kopplung bewirkten speziellen Informationsübertragung können ausgefallene Komponenten eines Vermittlungsclusters erkannt und von der Vermittlung von Verbindungen suspendiert werden. Ein Vermittlungscluster kann auf Anforderung eines externen Anwenders Verbindungen zwischen verschiedenen externen Netzschnittstellen innerhalb und bei Vorhandensein weiterer Vermittlungscluster auch außerhalb des Vermittlungsclusters vermitteln.

Bei der Kopplung der Gateways innerhalb eines Vermittlungsclusters können logische Verbindungen von einem Gateway des Vermittlungsclusters zu allen anderen Gateways desselben Vermittlungsclusters einschließlich zu sich selbst eingerichtet werden.

Die Kopplung der Gateways zwischen unterschiedlichen Vermittlungsclustern erfolgt, indem logische Verbindungen von einem Gateway eines Vermittlungsclusters zu allen Gateways eines anderen Vermittlungsclusters eingerichtet werden.

Gemäß Anspruch 3 können die Gateways der Vermittlungscluster durch redundante oder nicht redundante Koppelmedien miteinander verbunden sein. Bei redundanter Auslegung des Koppelmediums sind die Gateways gegen Ausfälle des Koppelmediums fehlertolerant.

Dabei sind für die physikalischen Verbindungen von Gateways in verschiedenen Rechnern gemäß Anspruch 4 sowohl Punkt-zu-Punkt Übertragungsmedien, z. B. serielle Leitungen, als auch Bussysteme, z. B. LAN, vorgesehen.

In einer technischen Realisierung gemäß Anspruch 5 erfolgt die Kopplung mittels Koppelprotokollstacks. Ein Koppelprotokollstack enthält dabei ein oder mehrere Übertragungsprotokolle. Jeder Gatewayrechner besitzt so viele Koppelprotokollstacks, wie es Vermittlungscluster im Netzwerk gibt.

Ein Koppelprotokollstack dient der Kopplung der Gateways eines Vermittlungsclusters untereinander und der Kopplung eines Gateways gemäß Anspruch 6 zu sich selbst - clusterinterne Kopplung. Weitere Koppelprotokollstacks dienen der Kopplung eines Gateways eines Vermittlungsclusters mit allen Gateways eines anderen Vermittlungsclusters - clusterexterne Kopplung. Zwei oder mehrere gekoppelte Koppelprotokollstacks verwalten ein gemeinsames Kanalbündel, in welchem eine oder mehrere logische Verbindungen in beide Richtungen etabliert werden können. Je nach Anzahl der Kopplungen eines Koppelprotokollstacks zu einem oder mehreren Gateways verwaltet ein Koppelprotokollstack ein oder mehrere Kanalbündel. Die jeweilige Anzahl der Kanalbündel ergibt sich aus der Konfiguration der Gateways und Vermittlungscluster. Die Anzahl der Kanalbündel für die clusterinterne Kopplung eines Koppelprotokollstacks wird bestimmt durch die Anzahl der verwendeten Gateways eines Vermittlungsclusters. Die Anzahl der Kanalbündel eines Koppelprotokollstacks für die clusterexterne Kopplung zu einem anderen Vermittlungscluster wird bestimmt durch die Anzahl der verwendeten Gateways in dem angekoppelten Vermittlungscluster.

Während der Verbindungsaufbauphase einer logischen Verbindung wird zu jedem erreichbaren Gateway im angewählten Vermittlungscluster je eine Ressource im jeweiligen Kanalbündel temporär belegt. Logische Verbindungen werden auf Anforderung externer Instanzen im Kanalbündel eingerichtet und zwischen den Koppelprotokollstacks getunnelt - Tunnelprotokoll. Die Anzahl der logischen Verbindungen hängt von der Art und der Anzahl der externen Schnittstellen und den Verbindungsanforderungen externer Instanzen ab.

Die Mittel zur Einrichtung von Nutzdatenkanälen gemäß Anspruch 7 bzw. der Koppelprotokollstack enthalten Funktionen, die eine Selektion eines geeigneten Gateways aus einem Vermittlungscluster ermöglichen. Dazu können spezielle Protokollprimitiven nach Anspruch 8 bzw. 9 eingeführt werden, welche über logische Verbindungen eines Koppelprotokollstacks an die erreichbaren Gateways übertragen werden.

Das Primitivenspiel zur Selektion des Gateways kann sowohl als eigene Protokollschicht entwickelt werden, als auch in bestehende Protokolle eines Koppelprotolollstacks integriert werden.

In Richtung des externen Netzwerkes oder Netzwerkverbundes arbeiten die Gatewayrechner mit dem jeweils notwendigen Übertragungsprotokoll der externen Kommunikationspartner. Für Zugsteuerungszwecke gemäß Anspruch 10 kann das z. B. der so genannte EURORADIO-Protokollstack sein.

Durch das Gateway erfolgt eine vollständige protokolltechnische Entkopplung von externem Übertragungsprotokoll und Koppelprotokoll. Dadurch ist die Gatewayinformation für den externen Kommunikationspartner transparent. Bei Bedarf können durch die Gateways auch verschiedene externe Übertragungsprotokolle parallel bedient werden. Weiterhin ist durch die Gatewaytechnologie auch eine protokolltechnische Umsetzung zwischen verschiedenen externen Übertragungsprotokollen möglich. Die Auswahl der externen Übertragungsprotokolle kann sowohl von den angeschlossenen Applikationen, als auch von den verwendeten Übertragungsmedien abhängen.

Durch die Benutzung verschiedener externer Protokolle und Netzwerke an einem Vermittlungscluster zur Repräsentanz eines externen logischen Netzwerkverbundes ist neben fehlertoleranten Netzübergängen auch die Möglichkeit gegeben, alternative Netzwerke als redundantes Gesamtsystem zur Verfügung zu stellen.

Die Anzahl der erreichbaren Kommunikationspartner der redundant verschalteten Netzvermittlung ist von der Anzahl und Ausprägung der externen Netzanschlüsse abhängig und prinzipiell nicht begrenzt.

Die Ausfallsicherheit der Rechneranordnung kann frei gewählt werden. Parametierbar sind die Anzahl der Vermittlungscluster, die Anzahl der Gateways je Vermittlungscluster, die Anzahl der verwendeten Rechner, die Zuordnung von Gateways und Vermittlungsclustern zu Rechnern und die Art der Redundanz der Koppelmedien zwischen den Rechnern. Auch der Grad der Redundanz der angeschlossenen Netzwerke kann frei gewählt werden. Die Art und Anzahl der von der Rechneranordnung vermittelbaren alternativen Netzverbindungen zwischen externen Instanzen kann durch die verwendeten Netzschnittstellen konfiguriert werden. Die Anzahl der vermittelbaren Verbindungen ist nicht beschränkt. Skalierbare Größen sind die Art und Anzahl der externen Netzschnittstellen und die Leistungsfähigkeit der Rechnereinrichtung inklusive Koppelmedien. Durch die Kombination der Ausfallsicherheit der Rechneranordnung mit einem/mehreren redundanten Netzwerk(en) kann die Gesamtverfügbarkeit eines Datenübertragungsdienstes den Erfordernissen angepasst werden. Die Rechneranordnung kann Verbindungen innerhalb eines Vermittlungsclusters und zwischen verschiedenen Vermittlungsclustern redundant vermitteln. Damit können neben alternativen Übertragungswegen innerhalb eines Netzwerkes auch alternative Übertragungswege zwischen verschiedenen Netzwerken - Netzwerkverbund - vermittelt werden. Es ist eine Umsetzung zwischen verschiedenen angeschlossenen externen Übertragungsmedien, Protokollen und Netzwerken möglich. Die Auswahl einer Verbindung aus mehreren vorhandenen Alternativen eines Vermittlungsclusters ermöglicht die Optimierung nach bestimmten Kriterien, z. B. Lastverteilung. Ausgefallene Komponenten der Rechneranordnung und ausgefallene Netzschnittstellen können automatisch erkannt und von der weiteren Vermittlung suspendiert werden. Die redundante Vermittlung ist für die externen Nutzer transparent. Durch Erweiterung der Anordnung um ein Ende-zu-Ende wirkendes Übertragungsprotokoll mit Fehlerkorrektur hinsichtlich ausgefallener Verbindungen können Ausfälle im Übertragungsweg für Applikationen verdeckt werden.

Nachfolgend wird die Erfindung anhand figürlicher Darstellungen näher erläutert. Es zeigen
- Figur 1: Protokollprimitive Gatewayselektion am Beispiel von vier Alternativen und
- Figur 2: eine redundante Kopplung zweier Vermittlungscluster mit jeweils drei Gateways.

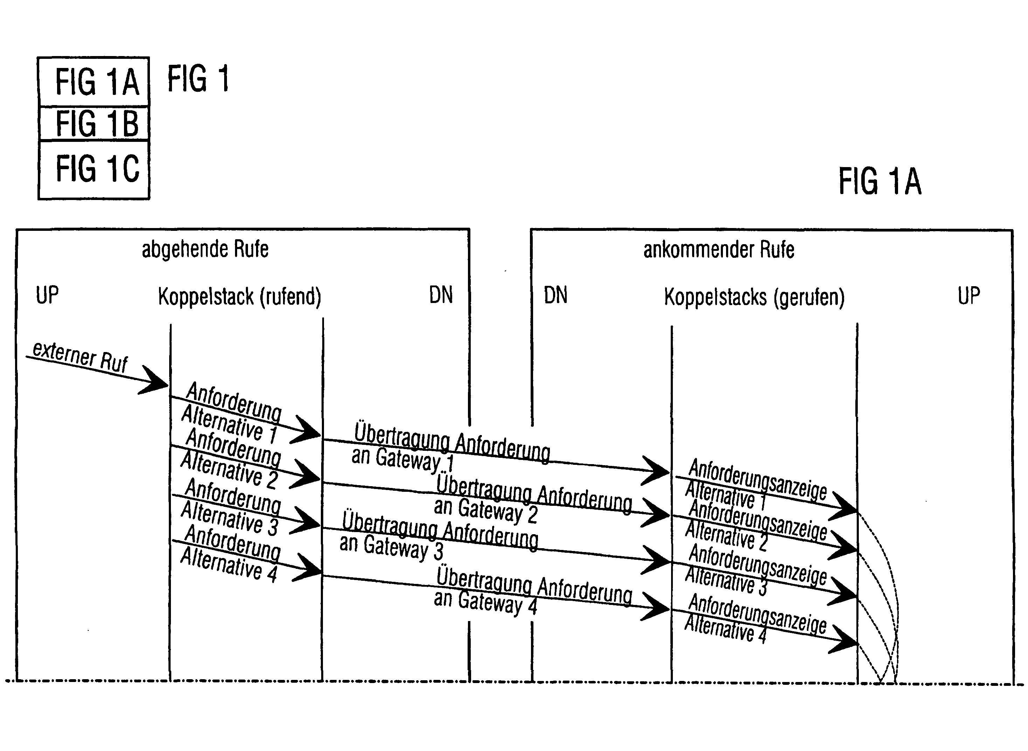

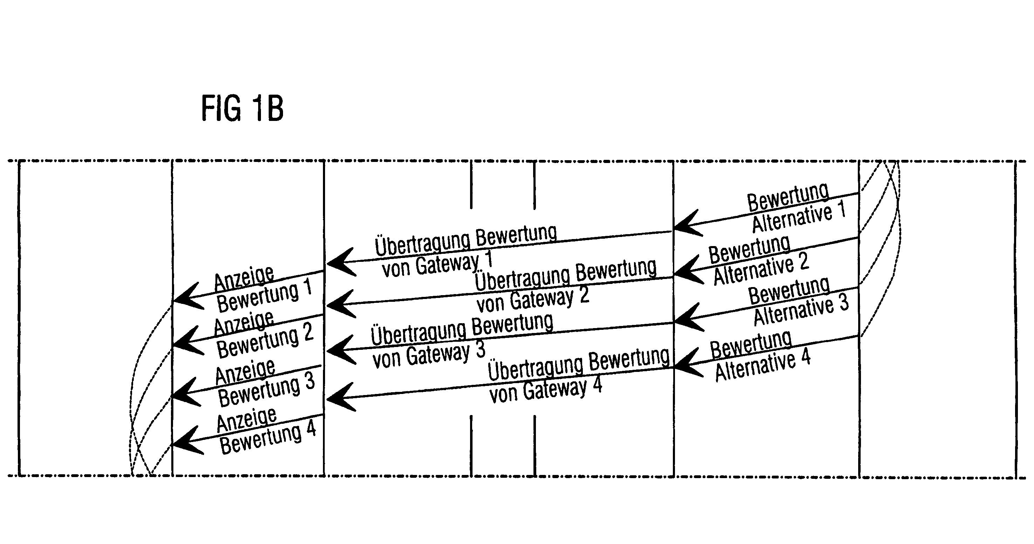

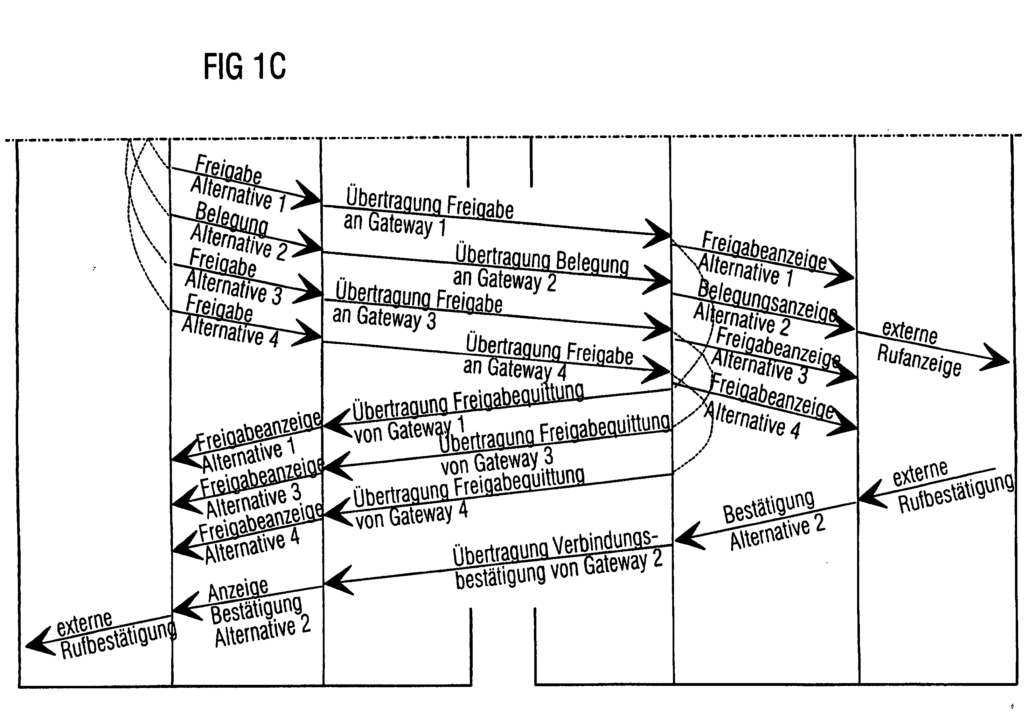

Das Primitivenspiel zur Selektion eines Gateways ist beispielhaft für die Konfiguration mit vier logischen Verbindungen in Figur 1 dargestellt.

Die Sequenz von Protokollprimitiven besteht aus drei Phasen:
1. Phase: Nach Anforderung durch eine rufende Instanz sendet ein rufendes Gateway ein Aufruftelegramm an alle über einen Koppelprotokollstack erreichbaren Gateways. Im Falle der Kopplung der Gateways eines Clusters untereinander erreicht das Aufruftelegramm auch das rufende Gateway, wo es in gleicher Weise wie bei den übrigen parallel redundanten Gateways verarbeitet wird.
2. Phase: Die funktionsbereiten gerufenen Gateways prüfen die Möglichkeit der angeforderten Verbindungen und generieren ein Antworttelegramm an das rufende Gateway. Das Antworttelegramm kann außerdem einen individuell ermittelten Bewertungsparameter enthalten, anhand dessen eine Optimierung, z. B. Lastverteilung, durchgeführt werden kann.
3. Phase: Durch das rufende Gateway erfolgt anhand der übertragenen Informationen in den Antworttelegrammen die Beurteilung, welche der angeschlossenen Gateways erreichbar sind. Enthalten die Antworttelegramme außerdem einen Bewertungsparameter, so kann durch das rufende Gateway außerdem bewertet werden, welche der möglichen Verbindungen am besten für die neue Verbindung geeignet ist. Mit dem Bewertungsparameter kann z. B. eine Lastoptimierung zwischen den Gatewayrechnern erfolgen. Über die ausgewählte Verbindung wird daraufhin der Link zum Anwender eingerichtet, indem die Verbindung vom rufenden Gateway zum ausgewählten Gateway bestätigt wird. Alle anderen Verbindungswege werden ausgelöst.

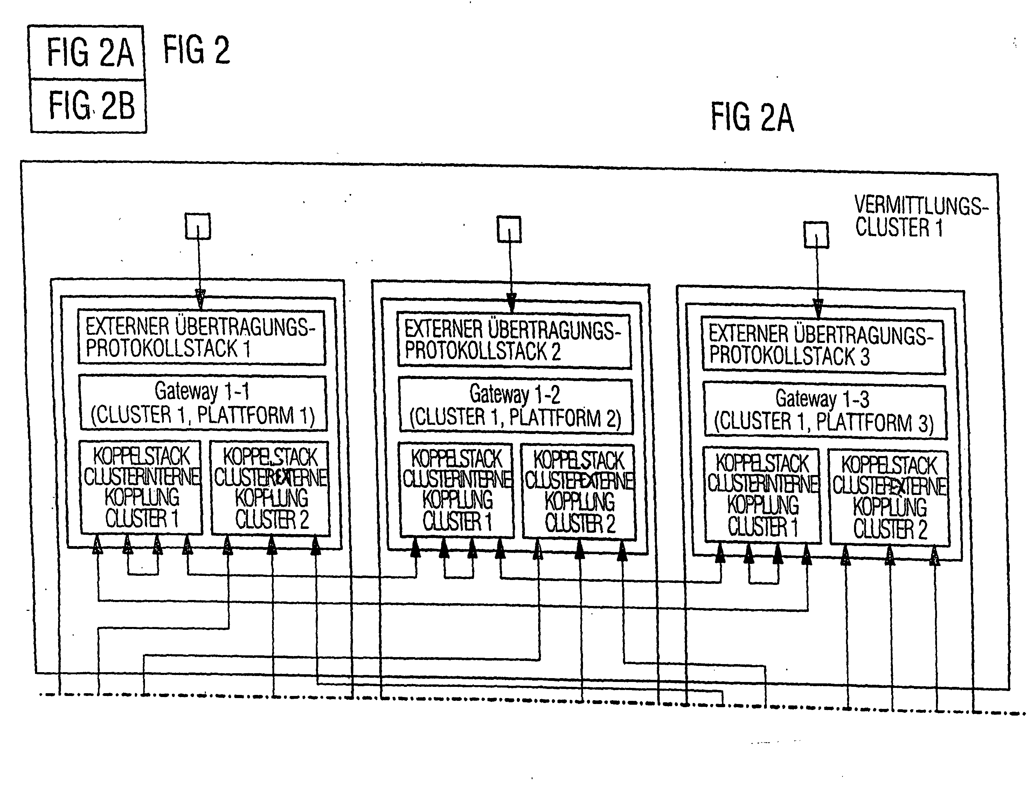

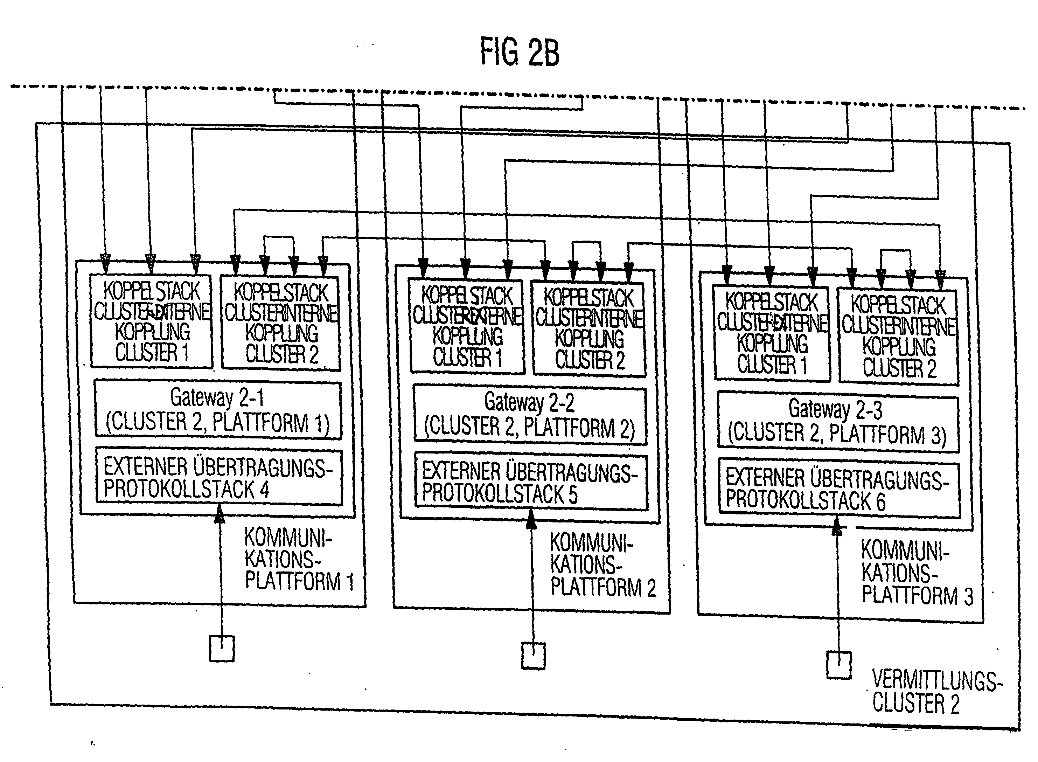

In Figur 2 ist beispielhaft die Architektur und logische Kopplung zweier Vermittlungscluster mit jeweils drei Gateways auf der Basis von drei redundanten Rechnern dargestellt. Jeder Rechner enthält dabei ein Gateway eines Vermittlungsclusters. Diese Anordnung ist funktionsfähig, solange mindestens ein Rechner mit mindestens zwei Netzanschlüssen - einmal kommend, einmal gehend - in Betrieb ist. Der Ausfall von Netzanschlüssen, Kopplungsmedien und Gatewayrechnern kann toleriert werden. Die Ausfälle führen ggf. zum Kommunikationsabbruch für bestehende Verbindungen und zu Einschränkungen im Hochlastbereich. Solange die Funktionsfähigkeit der Anlage besteht und freie Netzanschlüsse vorhanden sind, können jedoch neue Verbindungen eingerichtet werden. Falls der Abbruch einer Netzverbindung zu Problemen auf Applikationsseite führt, kann durch eine geeignete Ende-zu-Ende Protokollschicht ein für die Applikation verdeckter Wiederaufbau der Verbindung erfolgen.

Die Erfindung ist nicht beschränkt auf die hier dargestellten Ausführungsbeispiele. Vielmehr ist es möglich, durch Kombination und Modifikation der Mittel und Merkmale weitere Ausführungsvarianten zu realisieren, ohne den Rahmen der Erfindung zu verlassen. Dieser Rahmen wird durch die beiliegen den Ansprüche definiert.

## Patentansprüche

1. An mindestens ein Netzwerk angeschlossene Rechneranordnung mit mindestens zwei redundanten Rechnern zur Vermittlung verbindungsorientierter Datenkanäle,
**dadurch gekennzeichnet,**
**dass** jeder Rechner zwei Gateways enthält und mehrere Gateways ein Vermittlungscluster bilden, wobei die Gateways miteinander gekoppelt sind und zwischen den gekoppelten Gateways innerhalb eines Vermittlungsclusters sowie zwischen den gekoppelten Gateways verschiedener Vermittlungscluster Mittel zur Einrichtung von Nutzdatenkanälen vorgesehen sind, die in der Verbindungsaufbauphase eine Verbindung aus alternativen Verbindungen der gekoppelten Gateways auswählen.

2. Rechneranordnung nach Anspruch 1,
**dadurch gekennzeichnet,**
**dass** Art und Anzahl der Gateways je Vermittlungscluster, Art und Anzahl von Netzanschlüsse je Vermittlungscluster und die Zuordnung der Gateways zu den Rechnern konfigurierbar sind.

3. Rechneranordnung nach einem der vorangehenden Ansprüche,
**dadurch gekennzeichnet,**
**dass** für die Kopplung zwischen den Gateways redundante oder nicht redundante Koppelmedien vorgesehen sind.

4. Rechneranordnung nach Anspruch 3,
**dadurch gekennzeichnet,**
**dass** als Koppelmedium serielle Punkt-zu-Punkt Verbindungen und/oder Busverbindungen vorgesehen sind.

5. Rechneranordnung nach Anspruch 3 oder 4,
**dadurch gekennzeichnet,**
**dass** für die Ankopplung der Gateways an die Koppelmedien Koppelprotokollstacks vorgesehen sind.

6. Rechneranordnung nach Anspruch 5,
**dadurch gekennzeichnet,**
**dass** in jedem Gateway ein Koppelprotokollstack für die Kopplung der Gateways eines Vermittlungsclusters untereinander und mehrere Koppelprotokollstacks für die Kopplung des Gateways zu den Gateways eines anderen Vermittlungsclusters vorgesehen sind.

7. Rechneranordnung nach einem der vorangehenden Ansprüche,
**dadurch gekennzeichnet,**
**dass** die Mittel zur Einrichtung von Nutzdatenkanälen anhand eines zwischen den gekoppelten Gateways übertragbaren Kriteriums z. B. Lastverteilung, die Auswahl aus den verfügbaren Verbindungen unterstützen.

8. Rechneranordnung nach einem der vorangehenden Ansprüche,
**dadurch gekennzeichnet,**
**dass** zur Redundanzkoordination in der Verbindungsaufbauphase eines Nutzdatenkanals eine Primitivenabfolge zwischen den an den Koppelprotokollstack eines Gateways angekoppelten Gateways realisierbar ist.

9. Rechneranordnung nach Anspruch 8,
**dadurch gekennzeichnet,**
**dass** zur Redundanzkoordination in der Verbindungsaufbauphase eins Nutzdatenkanals zwischen den Gateways eines Vermittlungsclusters untereinander die Primitivabfolge vom rufenden Gateway auch zu sich selbst realisierbar ist.

10. Rechneranordnung nach einem der vorangehenden Ansprüche,
**gekennzeichnet durch**
die Verwendung für redundante Netzwerkknoten und für redundanten Netzwerkverbund im Bereich der Bahnkommunikation.

## Claims

1. Computer arrangement, connected to at least one network, having at least two redundant computers for switching connection-oriented data channels,
**characterized**
**in that** each computer contains two gateways, and a plurality of gateways form a switching cluster, the gateways being coupled to one another and means for setting up useful-data channels being provided between the coupled gateways within a switching cluster and between the coupled gateways of various switching clusters, said means selecting one connection from alternative connections for the coupled gateways in the connection setup phase.

2. Computer arrangement according to Claim 1,
**characterized**
**in that** the type and number of the gateways per switching cluster, the type and number of network connections per switching cluster and the allocation of the gateways to the computers can be configured.

3. Computer arrangement according to one of the preceding claims
**characterized**
**in that** redundant or nonredundant coupling media are provided for the coupling between the gateways.

4. Computer arrangement according to Claim 3,
**characterized**
**in that** the coupling medium provided is serial point-to-point connections and/or bus connections.

5. Computer arrangement according to Claim 3 or 4,
**characterized**
**in that** coupling protocol stacks are provided for coupling the gateways to the coupling media.

6. Computer arrangement according to Claim 5,
**characterized**
**in that** each gateway contains a coupling protocol stack for coupling the gateways of a switching cluster to one another and a plurality of coupling protocol stacks for coupling the gateway to the gateways of another switching cluster.

7. Computer arrangement according to one of the preceding claims,
**characterized**
**in that** the means for setting up useful-data channels using a criterion which can be transmitted between the coupled gateways, e.g. load distribution, assist the selection from the available connections.

8. Computer arrangement according to one of the preceding claims,
**characterized**
**in that** it is possible to realize a sequence of primitives between the gateways coupled to a gateway's coupling protocol stack for the purpose of redundancy coordination in a useful-data channel's connection setup phase.

9. Computer arrangement according to Claim 8,
**characterized**
**in that** between a switching cluster's gateways themselves it is possible to realize the sequence of primitives from the calling gateway to itself, too, for the purpose of redundancy coordination in a useful-data channel's connection setup phase.

10. Computer arrangement according to one of the preceding claims
**characterized by**
use for redundant network nodes and for a redundant network complex in the field of railway communication.

## Revendications

1. Système informatique raccordé à au moins un réseau et comportant au moins deux ordinateurs redondants pour la commutation de canaux de données orientés liaison,
**caractérisé par le fait que** chaque ordinateur contient au moins deux passerelles et que plusieurs passerelles forment un groupe de commutation, les passerelles étant connectées entre elles et des moyens pour l'établissement de canaux de données utiles étant prévus entre les passerelles connectées à l'intérieur d'un groupe de commutation ainsi qu'entre les passerelles connectées de différents groupes de commutation, lesquels moyens sélectionnent pendant la phase d'établissement de liaison une liaison parmi des liaisons alternatives des passerelles connectées.

2. Système informatique selon la revendication 1,
**caractérisé par le fait qu'**on peut configurer le type et le nombre des passerelles pour chaque groupe de commutation et le type et le nombre des connexions au réseau pour chaque groupe de commutation et l'association des passerelles aux ordinateurs.

3. Système informatique selon l'une des revendications précédentes,
**caractérisé par le fait que** des moyens de connexion redondants ou non redondants sont prévus pour la connexion entre les passerelles.

4. Système informatique selon la revendication 3,
**caractérisé par le fait que** des liaisons point à point sérielles et/ou des liaisons par bus sont prévues comme moyen de connexion.

5. Système informatique selon la revendication 3 ou 4,
**caractérisé par le fait que** des piles de protocoles de connexion sont prévues pour la connexion des passerelles aux moyens de connexion.

6. Système informatique selon la revendication 5,
**caractérisé par le fait que**, dans chaque passerelle, il est prévu une pile de protocoles de connexion pour la connexion des passerelles d'un groupe de commutation entre elles et plusieurs piles de protocoles de connexion pour la connexion de la passerelle aux passerelles d'un autre groupe de commutation.

7. Système informatique selon l'une des revendications précédentes,
**caractérisé par le fait que** les moyens pour l'établissement de canaux de données utiles à l'aide d'un critère transmissible entre les passerelles connectées, par exemple la répartition de la charge, aident à la sélection parmi les liaisons disponibles.

8. Système informatique selon l'une des revendications précédentes,
**caractérisé par le fait que**, pour la coordination de la redondance dans la phase d'établissement de liaison d'un canal de données utiles, on peut réaliser une séquence de primitives entre les passerelles raccordées à la pile de protocoles de connexion d'une passerelle.

9. Système informatique selon la revendication 8,
**caractérisé par le fait que**, pour la coordination de la redondance dans la phase d'établissement de liaison d'un canal de données utiles entre les passerelles d'un groupe de commutation entre elles, on peut aussi réaliser la séquence de primitives de la passerelle appelante vers elle-même.

10. Système informatique selon l'une des revendications précédentes,
**caractérisé par** son utilisation pour des noeuds de réseau redondants et pour des complexes de réseaux redondants dans le domaine de la communication ferroviaire.
